Europäisches Patentamt

European Patent Office

Office européen des brevets

(11) Publication number: **0 433 914 B1**

## EUROPEAN PATENT SPECIFICATION

(45) Date of publication of patent specification: **18.05.94**   (51) Int. Cl.⁵: **B60T 13/66**

(21) Application number: **90124253.7**

(22) Date of filing: **14.12.90**

(54) **A brake control device for a locomotive, in particular a shunting locomotive.**

(30) Priority: **22.12.89 IT 6817389**

(43) Date of publication of application:
**26.06.91 Bulletin 91/26**

(45) Publication of the grant of the patent:
**18.05.94 Bulletin 94/20**

(84) Designated Contracting States:
**DE FR GB**

(56) References cited:
**EP-A- 0 088 242
EP-A- 0 278 928
US-A- 4 181 369**

(73) Proprietor: **WABCO WESTINGHOUSE COM-
PAGNIA FRENI S.p.A.
Via Volvera 51
I-10045 PIOSSASCO (Torino)(IT)**

(72) Inventor: **Restori, Ettore
Piazza Bonghi, 18
I-10100 Torino(IT)**
Inventor: **Bortot, Renato
Via S. Paolo, 28
I-10100 Torino(IT)**
Inventor: **Casadei, Renato
Via Roma, 68
I-10010 Candia Canavese(IT)**

(74) Representative: **Jorio, Paolo et al
Studio Torta,
Via Viotti, 9
I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The present invention relates to a brake control device for a locomotive, in particular a shunting locomotive.

It is known for example from the document EP-A-0 278 928, that locomotives are provided with control devices manually actuated by the driver, which devices control the principal braking and driving functions of the locomotive.

There are usually two controls present on a locomotive, these being installed in the locomotive driver's cab and being utilised alternatively according to the manoeuvre which the driver has to perform. In general, in known devices when one control is not used it is connected to the other and follows its movements by means of complex mechanical transmissions.

The said controls are constituted by a mechanical unit comprising a rotating drum provided with a control lever actuated by the driver, which mechanical unit actuates a potentiometer which is part of an electronic control circuit for the locomotive's braking system. Therefore, in the following description the said controls are schematically indicated as potentiometers.

The object of the present invention is that of providing a device able to effect selection of one control and deselection of the other control in a simple, rapid and automatic manner.

According to the present invention there is provided a device for controlling a locomotive braking system, characterised by the fact that it comprises a first signal generating means adapted to be connected to a first control member; Second signal generating means adapted to be connected to a second control member; commutator means having a first and a second input respectively connected to the said first and second signal generator means, an output adapted to be connected to braking control means of the said locomotive, and a control input for controlling the operating position assumed by the said commutator means; a processor and a control unit having an input connected to the said signal generator means, and an output connected to the said control input of the said commutator means; the said unit generating an output signal which actuates the said commutator means and causes commutation solely when one or the other of the said generator means generates predetermined signals.

For a better understanding of the present invention a preferred embodiment thereof is hereafter described, purely by way of non limitative example, with reference to the attached drawing, which illustrate a simplified electrical diagram of the device.

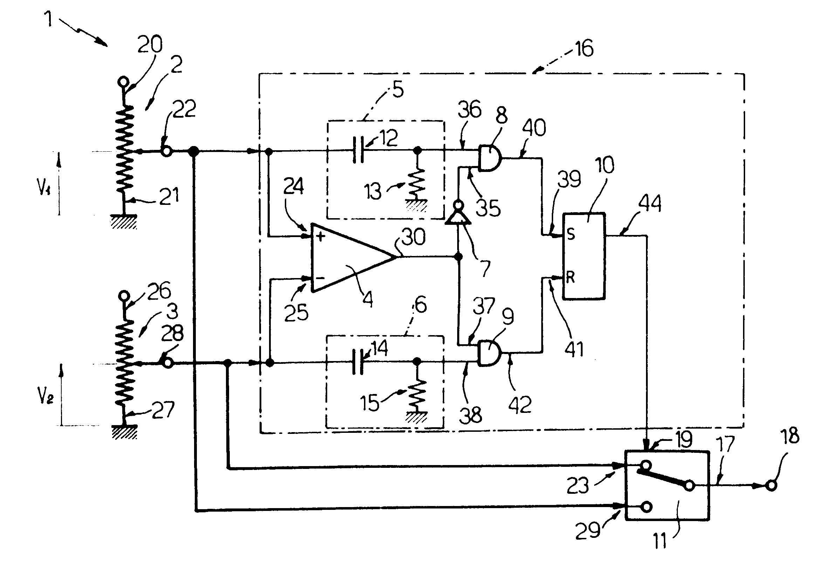

With particular reference to figure 1, there is illustrated a device 1 in which two potentiometers 2 and 3 act on a control circuit 16 constituted by an operational amplifier 4, two high pass filters 5 and 6, a NOT logic gate 7, two AND logic gates 8 and 9, a bistable 10 of the SET-RESET type actuating a switch 11 which has as its inputs two changeover terminals 23, 29 and as its output a common terminal 17, in turn connected to the terminal 18.

Each potentiometer 2 and 3 has a respective cursor 22 and 28 which is connected through the transmission (not shown) to a control device (not shown).

In particular the high pass filter 5 comprises a capacitor 12, which is connected to a terminal of a resistor 13 the other terminal of which is grounded. The high pass filter 6 is constituted by a capacitor 14, which is connected to a terminal of a resistor 15 the other terminal of which is grounded.

The potentiometer 2 has a terminal 20 connected to a positive reference voltage and a terminal 21 connected to ground potential.

The cursor 22 of the potentiometer 2, at which a voltage of value $V_1$ is present, is connected to the non-inverting input 24 of the amplifier 4, to the capacitor 12, and finally to the changeover terminal 29 of the switch 11.

The potentiometer 3 has one terminal 26 connected to a positive reference potential, and another terminal 27 connected to earth. The cursor 28 of the potentiometer 3, at which is present a voltage value $V_2$, is connected to an inverting input 25 of the operational amplifier 4, to a capacitor 14, and finally to the changeover terminal 23 of the switch 11.

The operational amplifier 4 has an output 30 which is connected, by means of a NOT gate 7, to an input 35 of an AND gate 8 which has another input 36 connected to a terminal of the capacitor 12, and a terminal of the resistor 13.

The output 30 of the amplifier 4 is also connected to one input 37 of an AND gate 9, which has another input 38 which is connected to a terminal of the capacitor 14, and a terminal of the resistor 15.

The bistable 10 has a "SET" input 39 connected to an output 40 of the AND gate 8 and a "RESET" input 41 which is connected to an output 42 of the AND gate 9. The bistable 10 has an output 44 which is connected to a control terminal 19 of the switch 11; in particular when the output 44 has a positive voltage level (corresponding to a logic "1"), the common terminal 17 of the changeover switch 11 is in communication with the changeover terminal 29; when the output 44 has a voltage level close to zero (corresponding to a logic "0") the common terminal 17 of the changeover switch 11 is connected to the changeover terminal 23.

The output terminal 18 of the device 1 is connected (in a manner not illustrated) to an input of an electronic control circuit (not shown) which pilots the braking installation of the locomotive, controlling the brakes in any operating condition. In particular, the present invention is advantageously applied to the control of a railway train brake control system of the type described in European Patent Application filed 22nd December 1988 under Application No 88121533.9 by the same applicant and published on 28th June 1989 under Publication No 0321987.

The operation of the device 1 is as follows.

Supposing first of all that the switch 11 is in the position indicated in the drawing, in which the output of the bistable 10 is at logic "0" level and the potentiometer 3 is therefore enabled.

In such conditions, the voltage value ($V_2$) taken from the cursor 28 is transmitted, via the switch 11, to the terminal 18 and therefore to the electronic brake control circuit connected to this latter as mentioned above. As long as the cursor 22 of the resistor 2 is not actuated the input 36 of the AND gate 8 is forced to logic level "0" by the resistor 13, and therefore the input 39 (and also the output 44) of the bistable 10 remain at logic level "0" thus confirming the operative position of the changeover switch 11 as is illustrated in the drawing, whatever the value of the voltage $V_2$ taken from the cursor 28 of the potentiometer 3.

Supposing now that driver desires to utilise the control member to which the potentiometer 2 is linked, and that the cursor of this latter assumes a position such as to draw a value $V_2 = V'_2$ - (corresponding to a predetermined degree of braking).

The activation of the potentiometer 2 requires a first manoeuvre in which the cursor 22 is displaced in such a way that voltage $V_1$ tapped off is less than the value $V'_2$ (for example it could be earthed) and a second manoeuvre in an opposite sense from the first to bring the voltage value $V_1$ to the required value.

The first manoeuvre causes the output 30 of the amplifier 4 to fall to the logic level "0" and therefore brings the input 35 of the AND gate 8 to a logic level "1" as well as bringing the input 37 of the gate 9 to the logic "0" level; the second manoeuvre causes the transmission of a positive pulse (logic "1") to the input 36 of the AND gate 8 as well as a positive analogue pulse to the output 40 of this latter.

In these conditions the SET inputs 39 and RESET inputs 41 of the bistable 10 have, respectively, a logic "1" signal and a logic "0" signal, which causes commutation of the output 44 of this latter to the logic "1" level. Consequently the switch 11 is caused to commute in such a way as to connect the terminals 29 and 17 and therefore permit the signal taken from the cursor 22 to reach the terminal 18.

The RESET input of the bistable 10 is maintained at logic level "0" by the resistor 15 (until the cursor 28 of the potentiometer 3 is again actuated in the manner explained above).

The SET input of bistable 10 oscillates between the value 0 or 1 depending on the manner of actuation of the cursor 22 of the potentiometer 2. In fact, if the cursor 22 is displaced (towards earth) in such a way as to tap off a lower voltage value, a negative voltage variation is transmitted, via the filter 12, to the input 36 of the gate 8, and therefore the output 40 assumes the logic value 0; If the cursor 22 is displaced (towards the terminal 20) in such a way as to tap off a greater voltage value, a positive voltage variation is transmitted, via the filter 12, to the input 36 of the gate 8 and therefore the output 40 of this latter assumes the logic "1" value. In each case this does not involve any commutation by the bistable 10.

The potentiometer 3 can be enabled again by executing on this latter the operation described above with reference to the potentiometer 2.

In conclusion, whenever the machine operator has to drive the locomotive by utilising the opposite control member from that used up to that instant, he simply displaces the cursor of the respective potentiometer in the above indicated manner. This manoeuvre causes the automatic positioning of the switch 11 in such a way as to connect the output of this latter to the cursor of the actuated potentiometer. From this instant onwards the voltage signals selected by the enabled potentiometer and corresponding to a predetermined operating condition for control of the brakes are directly transmitted to the output terminal 18 regardless of the type of manoeuvre (rapid, slow, etc) which the operator has to effect on the enabled potentiometer. Enablement of the other potentiometer can be obtained at any time as long as the operator acts on it as explained above.

From a study of the characteristics of the control device formed according to the present invention the advantages obtained thereby are evident.

In particular, it replaces in a totally reliable manner, and with extremely low cost, the complicated and expensive transmissions between the two above mentioned control members.

## Claims

1. A device for controlling a locomotive braking system, comprising first signal generator means (2) adapted to be connected to a first control member; second signal generator means (3) adapted to be connected to a second control member; characterised by commutator means (11) having first and second inputs (29, 23) respectively connected to the said first and second signal generator means (2, 3), an output (17) adapted to be connected to locomotive brake control means, and a control input (19) for controlling the operating position assumed by the said commutator means (11); a processor and control unit (16) having an input connected to the said signal generator means (2,3), and an output connected to the said input (19) for controlling the said commutator means (11); the said unit (16) generating an output signal which actuates the said commutator means (11) and causes commutation thereof solely when one or the other of the said signal generator means (2,3) generates predetermined signals.

2. A device according to claim (1), characterised by the fact that each of the said signal generator means include at least one potentiometer (2,3) having a cursor (22,28) actuated by a said control member; the said cursors (2,3) being respectively connected to the said inputs of the said processor and control means (16), and to the said inputs (23,29) of the said commutator means (11).

3. A device according to claim (1) or claim (2), characterised by the fact that the said processor and control means (16) is activated by the signal produced by the rapid displacement of one or the other of the cursors (22,28) of the said potentiometers (2,3).

4. A device according to claim (2) or claim (3), characterised by the fact that the said switch means are constituted by an electronic two-way commutator switch (11).

5. A device according to claim (4), characterised by the fact that the said processor and control means (16) includes at least one bistable circuit (11) the output (44) of which is connected to the said control input (19) of the said commutator means (11).

6. A device according to claim (5), in which the bistable circuit (11) has a first SET input (39) and a second RESET input (41), characterised by the fact that the said first input (39) is connected to an output (40) of a first logic AND gate (8); the second said input (41) is connected to an output (42) of a second logic AND gate 9.

7. A device according to claim (6), in which the said first logic AND gate (8) has a first (36) and a second (35) input, characterised by the fact that the said first input (36) is connected to the said cursor (22) of the said first potentiometer (2) by a first high pass filter (5); the said second input (35) being connected to an output terminal (30) of an operational amplifier (4) via a logic gate (7) of the NOT type.

8. A device according to claim (7), in which the said second logic AND gate (9) has a first input (38) and a second input (37), characterised by the fact that the said input (38) is connected to the said cursor (28) of the said second potentiometer (3) via a second high pass filter (6); the said second input (37) being connected to an output terminal (30) of the said operational amplifier (4).

9. A device according to claim (8), in which the said operational amplifier (4) has a first, non-inverting, input (24) and a second, inverting input (25), characterised by the fact that the said first input (24) is connected to the said cursor (22) of the said potentiometer (2); the said second input (25) being connected to the said cursor (28) of the said second potentiometer (3).

**Patentansprüche**

1. Vorrichtung zur Steuerung eines Lokomotiven-Bremssystems, bestehend aus einem ersten Signalgenerator (2), der mit einem ersten Steuerglied verbunden werden kann, und einem zweiten Signalgenerator (3), der mit einem zweiten Steuerglied verbunden werden kann, **gekennzeichnet durch** einen Kommutator (11) mit einem ersten bzw. zweiten Eingang (29, 23), die jeweils mit dem ersten und zweiten Signalgenerator (2, 3) verbunden sind, mit einem Ausgang (17), der mit der Lokomotiven-Bremssteuereinrichtung verbunden werden kann und mit einem Steuereingang (19) zur Steuerung der Arbeitsstellung, die der Kommutator (11) einnimmt, und eine Prozessor- und Steuereinheit (16), deren Eingang mit dem Signalgeneratorn (2, 3) verbunden ist und mit einem Ausgang, der mit dem Eingang (19) zur Steuerung des Kommutators (11) verbunden ist, wobei die Einheit (16) ein Ausgangssignal erzeugt, das den Kommutator (11) betätigt und dessen Umschaltung nur dann veranlaßt, wenn der eine oder andere Signalgenerator (2, 3) vorbestimmte Signale erzeugt.

**2.** Vorrichtung nach Anspruch 1,
**dadurch gekennzeichnet, daß**
jeder Signalgenerator wenigstens ein Potentiometer (2, 3) mit einem Abgriff (22, 28) aufweist, der von dem Steuerglied betätigt wird, wobei die Abgriffe (2 , 3) jeweils mit den Eingängen der Prozessor- und Steuereinrichtung (16) und den Eingängen (23, 29) des Kommutators (11) verbunden sind.

**3.** Vorrichtung nach Anspruch 1 oder 2,
**dadurch gekennzeichnet, daß**
die Prozessor- und Steuereinrichtung (16) von dem Signal betätigt wird, das durch die schnelle Verstellung des einen oder anderen Abgriffs (22, 28) der Potentiometer (2, 3) betätigt wird.

**4.** Vorrichtung nach Anspruch 2 oder 3,
**dadurch gekennzeichnet, daß**
die Schalter aus einem elektronischen Zweiwege-Umschalter (11) bestehen.

**5.** Vorrichtung nach Anspruch 4,
**dadurch gekennzeichnet, daß**
die Prozessor- und Steuereinrichtung (16) wenigstens einen bistabilen Kreis (11) aufweist, dessen Ausgang (44) mit dem Steuereingang (19) des Kommutaors (11) verbunden ist.

**6.** Vorrichtung nach Anspruch 5, bei der der bistabile Kreis (11) einen ersten Eingang (39) zum Setzen und einen zweiten Eingang (41) zum Rückstellen aufweist,
**dadurch gekennzeichnet, daß**
der erste Eingang (39) mit einem Ausgang (40) eines ersten logischen UNO-Glieds (8) und der zweite Eingang (41) mit einem Ausgang (42) eines zweiten logischen UND-Glieds (9) verbunden ist.

**7.** Vorrichtung nach Anspruch 6, bei der das erste logische UND-Glied (8) einen ersten (36) und einen zweiten (35) Eingang aufweist,
**dadurch gekennzeichnet, daß**
der erste Elngang (36) mit dem Angriff (22) des ersten Potentiometers (2) durch ein erstes Hochpaßfilter (5) verbunden ist, wobei der zweite Eingang (35) mit einem Ausgang (30) eines Funktionsverstärkers (4) über ein logisches Glied (7) des NOT-Typs verbunden ist.

**8.** Vorrichtung nach Anspruch 7, bei der das zweite logische UND-Glied (9) einen ersten Eingang (38) und einen zweiten Eingang (37) aufweist,
**dadurch gekennzeichnet, daß**
der erste Eingang (38) mit dem zweiten Abgriff (28) des zweiten Potentiometers (3) über ein zweites Hochpaßfilter (6) verbunden ist, wobei der zweite Eingang (37) mit einem Ausgang (30) des Funktionsverstärkers (4) verbunden ist.

**9.** Vorrichtung nach Anspruch 8, bei der der Funktionsverstärker (4) einen ersten, nicht invertierenden Eingang (24) und einen zweiten invertierenden Eingang (25) aufweist,
**dadurch gekennzeichnet, daß**
der erste Eingang (24) mit dem Abgriff (22) des zweiten Potentiometers (2) verbunden ist, wobei der zweite Eingang (25) mit dem zweiten Abgriff (28) des zweiten Potentiometers (3) verbunden ist.

**Revendications**

**1.** Dispositif de commande d'un système de freinage d'une locomotive, comprenant un premier moyen générateur de signal (2), adapté de manière à être relié à un premier élément de commande, un second moyen générateur de signal (3) adapté de manière à être relié à un second élément de commande, caractérisé en ce qu'il comprend un commutateur (11) ayant des première et seconde entrées (29,23) respectivement connectées aux premier et second moyens générateurs de signal (2,3), une sortie (17) adaptée de manière à être connectée à un moyen de commande d'un frein de la locomotive, et une entrée de commande (19) pour commander la position de fonctionnement prise par le commutateur (11), une unité de traitement et de commande (16) ayant une entrée connectée aux moyens générateurs de signal (2,3) et une sortie connectée à l'entrée de commande (19) du commutateur (11), cette unité (16) produisant un signal de sortie qui provoque l'actionnement du commutateur et sa commutation uniquement lorsque l'un ou l'autre des moyens générateurs de signal (2,3) produit des signaux prédéterminés.

**2.** Dispositif suivant la revendication 1 caractérisé en ce que chacun des moyens générateurs de signal comporte au moins un potentiomètre (2,3) ayant un curseur (22,28) actionné par un élément de commande, ces curseurs (2,3) étant connectés respectivement aux entrées de l'unité de traitement et de commande (16) et aux entrées (23,29) du commutateur (11).

**3.** Dispositif suivant l'une quelconque des revendications 1 ou 2 caractérisé en ce que l'unité de traitement et de commande (16) est activée par le signal produit par le déplacement rapide de l'un ou l'autre des curseurs (22,28) des potentiomètres (2,3).

4. Dispositif suivant l'une quelconque des revendications 2 ou 3 caractérisé en ce que le commutateur est constitué par un commutateur électronique à deux voies (11).

5. Dispositif suivant la revendication 4 caractérisé en ce que l'unité de traitement et de commande (16) comporte au moins un circuit bistable (10) dont la sortie (44) est connectée à l'entrée de commande (19) du commutateur (11).

6. Dispositif suivant la revendication 5 dans lequel le circuit bistable (10) a une première entrée d'enclenchement (39) et une seconde entrée de remise à zéro (41), caractérisé en ce que la première entrée (39) est connectée à une sortie (40) d'une première porte logique ET (8) et la seconde entrée (41) est connectée à une sortie (42) d'une seconde porte ET logique (9).

7. Dispositif suivant la revendication 6 dans lequel la première porte logique ET (8) a une première entrée (36) et une seconde entrée (35), caractérisé en ce que la première entrée (36) est connectée au curseur (22) du premier potentiomètre (2) par l'intermédiaire d'un premier filtre passe-haut (5) et la seconde entrée (35) est connectée à une borne de sortie (30) d'un amplificateur opérationnel (4), par l'intermédiaire d'une porte logique (7) du type NON.

8. Dispositif suivant la revendication 7 dans lequel la seconde porte logique ET (9) a une première entrée (38) et une seconde entrée (37), caractérisé en ce que la première entrée (38) est connectée au curseur (28) du second potentiomètre (3), par l'intermédiaire d'un second filtre passe-haut (6), et la seconde entrée (37) est connectée à la borne de sortie (30) de l'amplificateur opérationnel (4).

9. Dispositif suivant la revendication 8 dans lequel l'amplificateur opérationnel (4) a une première entrée directe (24) et une seconde entrée inverse (25), caractérisé en ce que sa première entrée (24) est connectée au curseur (22) du premier potentiomètre (2) tandis que sa seconde entrée (25) est connectée au curseur (28) du second potentiomètre (3).

EP 0 433 914 B1